# EUROPÄISCHE PATENTSCHRIFT

(11) **EP 4 110 542 B1**
(45) Veröffentlichungstag und Bekanntmachung des Hinweises auf die Patenterteilung: **25.12.2024**
(21) Anmeldenummer: 21710454.6
(22) Anmeldetag: 05.03.2021
(51) Int. Cl.: B23C 5/10, B23C 5/16

(54) **FRÄSSTIFT**
SHANK MILLING CUTTER
FRAISE TIGE

(30) Priorität: 06.03.2020 DE 102020106105
(43) Veröffentlichungstag der Anmeldung: 04.01.2023
(73) Patentinhaber: ATA tools Limited, Killygarry, Co. Cavan H12 DK46 (IE)
(72) Erfinder: ROBERTSON, Peter, Dublin, D16 K7E2 (IE); GAFFNEY, Paul, Cavan, A82 K283 (IE); HETHERTON, John, Meath, A82 EK74 (IE)
(74) Vertreter: Canzler & Bergmeier Patentanwälte Partnerschaft mbB
(86) Internationale Anmeldenummer: PCT/EP2021/055620
(87) Internationale Veröffentlichungsnummer: WO 2021/176069

(56) Entgegenhaltungen:
- EP-A1- 3 533 547
- EP-A1- 3 616 813
- CN-A- 106 270 700
- DE-U1- 29 912 978
- JP-A- H10 263 915

## Beschreibung

Die Erfindung betrifft einen Frässtift nach dem Oberbegriff des Anspruchs 1, wie beispielsweise aus der DE 299 12 978 U1 bekannt.

Derartige Frässtifte sind auch unter dem Namen Rotationsfeilen bekannt (im Englischen: bur oder burr). Sie werden gemäß der Definition in DIN 8032/8033 und ANSI sowohl in handgeführten als auch automatisierten, jeweils mit einem elektrischen Motor oder auch pneumatisch angetriebenen Werkzeug eingesetzt und werden zum manuellen und automatischen (einschließlich Führung mittels Roboter) Schleifen von Metalloberflächen durch feinen Materialabtrag verwendet.

Bekannte Frässtifte für den vorgenannten Zweck weisen einen Schaftabschnitt und einen Fräsabschnitt auf, der sich an den Schaftabschnitt anschließt und in einer freien Frässpitze endet. Zumindest der Fräsabschnitt besteht aus Hartmetall, beispielsweise aus Wolframkarbid. Der Schaftabschnitt und der Fräsabschnitt sind drehsymmetrisch zu einer Rotationsachse ausgebildet. Der Fräsabschnitt besitzt eine Fräslänge und weist eine Vielzahl von Schneiden auf, die durch voneinander beabstandete Hauptnuten getrennt sind. Eine übliche Anzahl an Hauptnuten bei bekannten Frässtiften mit einem Durchmesser von 12,7 mm (1/2") beträgt beispielsweise 24. Die Hauptnuten besitzen eine Nuttiefe, im Folgenden Hauptnuttiefe genannt, und erstrecken sich in einer ersten Drallrichtung helixförmig mit einem ersten Drallwinkel entlang des Fräsabschnitts. Jede der Schneiden weist hierbei eine Spanfläche und eine Freifläche sowie eine Schneidkante am Übergang zwischen der Spanfläche und der Freifläche unter Bildung eines Spanwinkels und eines Freiwinkels auf. Der erste Drallwinkel wird zwischen einer an die Schneidkante angelegten Tangente und einer Parallelen zur Rotationsachse gemessen. In jeder Freifläche ist eine Mehrzahl von Spanbrechern (im Englischen: chip breaker) vorgesehen. Die Spanbrecher weisen eine Tiefe auf, die im Folgenden Spanbrechertiefe genannt wird, und sich helixförmig in einer zweiten Drallrichtung mit einem zweiten Drallwinkel entlang des Fräsabschnitts erstrecken. Der zweite Drallwinkel wird zwischen einer Tangente an die Verbindungslinie von in aufeinanderfolgenden Freiflächen vorgesehener benachbarter, aber zueinander schräg versetzter Spanbrecher und der genannten Parallelen zur Rotationsachse gemessen. Die erste Drallrichtung verläuft in Drehrichtung des Frässtifts, während die zweite Drallrichtung entgegengesetzt zur ersten Drallrichtung und damit auch entgegen der Drehrichtung des Frässtifts verlaufen kann; der zweite Drallwinkel ist dann negativ. Alternativ kann die zweite Drallrichtung auch in Drehrichtung des Frässtifts verlaufen, wobei der zweite Drallwinkel dann positiv ist.

Die Funktion der Spanbrecher besteht einerseits in der Kontrolle der Spanbildung und andererseits in der Reduzierung des Schneidwiderstands. Wenn die Späne in eine günstige Länge gebrochen werden können, wickeln sie sich nicht um das Werkstück, Vibrationen werden unterdrückt und die Wahrscheinlichkeit der Beschädigung des Frässtifts sinkt. Ein niedriger Schneidwiderstand verhindert ein frühzeitiges Brechen der Schneidkante aufgrund von Vibrationen. Auch trägt ein niedriger Schneidwiderstand zur Reduzierung der Last und der Wärmeentwicklung bei und kann den Verschleiß verzögern.

Handelsübliche Frässtifte der vorgenannten Art haben den Nachteil, dass ihre Zerspanungsleistung kaum gesteigert werden kann, ohne ihre Lebensdauer allzu sehr zu verkürzen. Bis jetzt ist kein Frässtift bekannt geworden, der eine optimale Balance zwischen guter Fräsleistung und langer Lebensdauer bietet.

Es ist Aufgabe der vorliegenden Erfindung, einen Frässtift mit einer hohen Zerspanungsleistung bei gleichzeitiger hoher Lebensdauer, d.h. niedrigem Verschleiß, zur Verfügung zu stellen.

Diese Aufgabe wird gelöst durch einen Frässtift mit den Merkmalen des Anspruchs 1.

Ein erfindungsgemäßer Frässtift ist generell gemäß DIN 8032/8033 und ANSI-Standard ausgebildet.

Weiterhin ist der erfindungsgemäße Frässtift mit seinem aus Hartmetall bestehenden Fräsabschnitt insbesondere an die Bearbeitung von Stahloberflächen angepasst.

Im kennzeichnenden Teil von Anspruch 1 wird der Begriff "im Bereich des Fräsabschnitts mit dem größten Durchmesser" verwendet, so dass ein einheitlicher Bezugspunkt auch bei unterschiedlichen Geometrien der erfindungsgemäßen Frässtifte gegeben ist. Somit können beispielsweise sowohl bei einem zylindrischen als auch einem kugelförmigen Fräsabschnitt die erfindungsgemäßen Merkmale identifiziert werden. Etwas weniger präzise, für den Fachmann aber verständlich, könnte die Bezeichnung "Grundkörper des Fräsabschnitts" gewählt werden, insbesondere zur Abgrenzung vom Bereich der Frässpitze.

Gemäß der Erfindung liegt die Spanbrechertiefe eines erfindungsgemäßen Frässtifts im Bereich des Fräsabschnitts mit dem größten Durchmesser zwischen 5 und 25% der Hauptnuttiefe. Eine solche Spanbrechertiefe ist wesentlich geringer als aus dem Stand der Technik bekannt. Mit einer geringen Spanbrechertiefe geht herstellungsbedingt auch eine relativ geringe Spanbrecherbreite (gemessen entlang der Schneidkante) einher. Der durch diese Merkmale erzielte technische Effekt besteht darin, dass eine größere lineare Länge der Hauptnuten im Vergleich zu den bekannten tieferen und auch breiteren Spanbrechertiefen erreicht wird. Im Stand der Technik sind hingegen Spanbrechertiefen von bis zu 80% der Hauptnuttiefen bekannt.

Weiterhin liegt der Freiwinkel im Bereich des Fräsabschnitts mit dem größten Durchmesser zwischen 10° und 20°. Hierdurch wird - im Zusammenspiel mit den anderen erfindungsgemäßen Merkmalen - erreicht, dass die Schneidkanten widerstandfähiger sind und daher einem geringeren Verschleiß unterliegen.

Weiterhin liegt der Spanwinkel im Bereich des Fräsabschnitts mit dem größten Durchmesser zwischen -3° und +14° liegt. Es hat sich herausgestellt, dass dieser gegenüber bekannten Frässtiften relativ klein gewählte Spanwinkel zur Erzielung einer guten Zerspanungsleistung und einem geringen Verschleiß beiträgt.

Weiterhin ist der erste Drallwinkel erfindungsgemäß größer als 25°. Hiermit kann im Zusammenspiel mit einer relativ geringen Anzahl an Hauptnuten eine erhöhte Festigkeit der Hauptnuten erreicht werden, so dass eine längere Lebensdauer des Frässtifts erzielt werden kann. Auch können durch einen relativ großen Drallwinkel mehr Schneidkanten in Kontakt mit dem Werkstück gelangen. Auf diese Weise kann die Last an den Schneidkanten reduziert werden; auch wird die Oberflächenqualität des Werkstücks verbessert.

Eine weitere erfindungsgemäße Maßnahme liegt darin, dass die Anzahl der Hauptnuten weniger als 15 beträgt und vorzugsweise nicht mehr als zwölf. Auch hierdurch wird eine hohe Zerspanungsleistung realisiert, wobei im Zusammenspiel aller Merkmale des Anspruchs 1 der Verschleiß des Fräsabschnitts überraschend sehr gering ist, was zumindest zum Teil auch durch die erhöhte Festigkeit der Hauptnuten erreicht wird.

Wenn im Rahmen der vorliegenden Offenbarung allgemein der Ausdruck "zwischen Wert a und Wert b" verwendet wird, ist hierunter zu verstehen, dass auch die beiden Endwerte a und b mitumfasst sind.

Die technische Gesamtwirkung aller genannter Merkmale besteht darin, dass der erfindungsgemäße Frässtift beim Start des Schleifprozesses eine überragende Leistung erzielt. Versuche haben ergeben, dass eine Leistungssteigerung von 80% und mehr gegenüber vergleichbaren bekannten Frässtiften erreicht werden kann. Auch nach einem 40-minütigen Schleifen liegt die Schleifleistung bei getesteten erfindungsgemäßen Frässtiften ca. 30% höher im Vergleich zu herkömmlichen Frässtiften. Diese Leistungssteigerung geht überraschenderweise nicht zu Lasten der Lebensdauer der erfindungsgemäßen Frässtifte. Die Erfinder gehen davon aus, dass dieser unerwartete Effekt insbesondere durch die geringe Spanbrechertiefe im Vergleich zu der Hauptnutentiefe (und die damit einhergehende geringe Breite der Spanbrecher entlang der Schneidkante) sowie durch den geringen Freiwinkel begründet ist.

Nach dem oben Gesagten ist ein wichtiges Merkmal des erfindungsgemäßen Frässtift, dass seine Spanbrecher eine sehr kleine Tiefe (und damit auch Breite) im Vergleich zu bekannten Frässtiften aufweisen, wobei der Zweck der Spanbrecher, d.h. das Zerkleinern der Späne während des Schleifprozesses, erhalten bleibt. Durch die geringe Tiefe und die damit einhergehende, herstellungsbedingte geringe Breite der Spanbrecher wird die lineare Länge der verfügbaren Schneidekante maximiert.

Es hat sich hierbei als besonders vorteilhaft erwiesen, wenn die Spanbrechertiefe im Bereich des Fräsabschnitts mit dem größten Durchmesser zwischen 10% und 20% der Hauptnuttiefe liegt.

Alternativ, zusätzlich oder ergänzend liegt die Spanbrechertiefe im Bereich des Fräsabschnitts mit dem größten Durchmesser vorzugsweise zwischen 0,1 und 0,25 mm und ist besonders bevorzugt nicht größer als 0,2 mm. Nimmt man das zuvor genannte bevorzugte Merkmal bzgl. der Spanbrechertiefe, d.h. die Spanbrechertiefe liegt im Bereich zwischen 10% und 20% der Hauptnuttiefe, als Referenz, liegt dann die Hauptnuttiefe zwischen 0,5 mm und 2,5 mm, und vorzugsweise nicht größer als 20 mm. Bei beispielhaften Ausführungsformen kann die Spanbrechertiefe 0,1 mm im Falle einer Hauptnuttiefe von 1 mm betragen. Bei einer anderen beispielhaften Ausführungsform liegt die Spanbrechertiefe bei 0,2 mm im Falle einer Hauptnuttiefe von 2 mm.

Die Spanbrechertiefe im Bereich des Fräsabschnitts mit dem größten Durchmesser ist vorteilhafterweise nicht größer als die maximale Breite der Spanbrecher (Spanbrecherbreite), gemessen entlang der Schneidkante. Bevorzugt ist die Spanbrecherbreite beispielsweise doppelt so groß wie die Spanbrechertiefe. Ein solches Verhältnis von Spanbrecherbreite zu Spanbrechertiefe wird beispielsweise erreicht, wenn ein Spanbrecherrad mit einem 90°-Winkel verwendet wird.

Die Spanbrecher sind besonders bevorzugt vollständig in der Freifläche eingebracht, ragen also nicht bis in die von der Drehrichtung abgewandte Hauptnut bzw. den nachfolgenden Spanraum hinein.

Vorzugsweise weisen alle Spanbrecher einen Abstand zum Übergang zwischen Schaftabschnitt und Fräsabschnitt und/oder zur Frässpitze auf. Dieser Abstand beträgt beispiels- und vorzugsweise mindestens 1 mm. Hierdurch wird erreicht, dass keine Schwachstelle an den Schneiden entsteht, die bei einem zu klein gewählten Abstand der Spanbrecher vom Schaftabschnitt bzw. zur Frässpitze abbrechen könnten.

Es hat sich als sehr vorteilhaft erwiesen, wenn der Freiwinkel im Bereich des Fräsabschnitts mit dem größten Durchmesser zwischen 12° und 18°, besonders bevorzugt zwischen 13° und 15° liegt. Im Zusammenspiel mit den anderen Merkmalen des erfindungsgemäßen Frässtifts haben sich hierbei die besten Ergebnisse in Bezug auf Schleifleistung und Langlebigkeit ergeben.

Sehr gute Zerspanungsleistungen bei nur kleinem Verschleiß wurden bei Spanwinkeln an den Schneidkanten im Bereich zwischen 0° und +12° erzielt, wobei sich der Bereich zwischen +5° und +10° als besonders günstig erwies.

Gemäß vorteilhafter Ausführungsformen weisen die Freiflächen im Bereich des Fräsabschnitts mit dem größten Durchmesser eine Breite, gemessen in Drehrichtung des Frässtifts, von 0,2 mm bis 1 mm, vorzugsweise von 0,4 bis 0,8 mm auf.

Besonders bevorzugt ist die besagte Freifläche, die direkt an der jeweiligen Schneidkante beginnt und entgegen der Drehrichtung des Frässtifts verläuft, die einzige bei der Herstellung der Hauptnuten erzeugte Freifläche. Diese Freifläche wird im Englischen auch "primary relief" genannt. Eine weitere Freifläche ("secondary relief") schließt sich demnach - entgegen der Drehrichtung des Frässtifts - nicht an die besagte Freifläche (primary relief) an. Vielmehr beginnt unmittelbar im Anschluss an die (erste) Freifläche die Hauptnut mit dem entsprechenden Spanraum. Diese Ausführung erleichtert zum einen die Herstellung der Schneiden bzw. Hauptnuten, zum anderen hat es sich als nicht förderlich erwiesen, eine zusätzliche Freifläche vorzusehen.

Wie eingangs erwähnt, liegt eine übliche Größe des ersten Drallwinkels bei bekannten Frässtiften bei 25°. Gemäß der Erfindung ist der erste Drallwinkel größer gewählt und hierbei vorzugsweise größer als 27,5°. Besonders bevorzugt liegt der erste Drallwinkel im Bereich zwischen 29° und 32°, und ganz besonders bevorzugt bei 30°.

Der zweite Drallwinkel, d.h. der von den Spanbrechern gebildete Steigungswinkel, weist bevorzugt eine geringere Steigung auf als der erste Drallwinkel. Es hat sich als vorteilhaft erwiesen, wenn dieser im Bereich zwischen -75° und -88° liegt, bevorzugt zwischen -78° und -85°, und besonders bevorzugt zwischen -80° und -82°. Alternativ kann der zweite Drallwinkel positiv gewählt sein und liegt dann vorzugsweise zwischen +75° und +88°, bevorzugt zwischen +78° und +85°, und besonders bevorzugt zwischen +80° und +82°.

Bei den erfindungsgemäßen Frässtiften ist bevorzugt der erste Drallwinkel von allen Schneiden und Hauptnuten gleich groß. Es sind aber auch Ausführungsformen innerhalb der Lehre der Erfindung möglich, bei denen die Schneiden und Hauptnuten von mindestens zwei aufeinander folgenden Schneiden (und Hauptnuten) einen geringfügig unterschiedlichen ersten Drallwinkel aufweisen. Der erste Drallwinkel ist zudem entlang der Fräslänge vorzugsweise konstant. Es ist zudem bevorzugt, wenn auch der zweite Drallwinkel für die Spanbrecher konstant ist.

Generell sind variable erste und/oder zweite Drallwinkel möglich. Variable erste Drallwinkel können z.B. für eine oder mehrere individuelle Hauptnuten und/oder zwischen verschiedenen Hauptnuten realisiert werden. In Bezug auf einen variablen zweiten Drallwinkel kann eine mögliche Ausführungsform beispielsweise eine vom Schaft zur Frässpitze wachsende Steigung aufweisen. Andere Ausführungsformen bezüglich eines variablen zweiten Drallwinkels sind ohne Einschränkung möglich.

Bei erfindungsgemäßen Frässtiften mit einem Radius an der Frässpitze (womit beispielsweise Frässtifte mit zylindrischem Fräsabschnitt nicht hierunter fallen), gehen vorteilhafterweise die beiden Schneidkanten mindestens eines Paares von Schneidkanten, die an sich gegenüberliegenden Seiten des Fräsabschnitts verlaufen, an der Frässpitze ineinander über. Im Gegensatz zu bekannten Frässtiften, bei denen die einzelnen Schneidkanten an der Frässpitze frei enden, bilden bei der genannten vorteilhaften Ausführungsform zumindest zwei Schneidkanten eine gemeinsame Schneidkante an der Frässpitze aus. Diese zwei Schneidkanten des besagten mindestens einen Paares bilden hierbei in der Draufsicht auf die Frässpitze vorzugsweise eine S-Form aus. Die Stabilität der Frässpitze kann hierdurch erhöht werden. Auch ist es - in geringem Umfang - möglich, mit der Frässpitze Schneid- bzw. Bohrvorgänge auszuführen. Es ist auch möglich, dass z.B. sechs Schneidkanten an der vorderen Spitze in der Mitte des Werkzeugs zusammenlaufen.

Es ist besonders bevorzugt, dass die Anzahl der Hauptnuten kleiner oder gleich dem größten Durchmesser, dieser gemessen in mm, des Fräsabschnitts ist. Dementsprechend hat es sich als positiv im Hinblick auf das Zerspanungsergebnis - bei geringem Verschleiß - herausgestellt, dass
- bei einem größten Durchmesser des Fräsabschnitts von 6 mm die Anzahl der Hauptnuten 5 bis 7, vorzugsweise 6, beträgt,
- bei einem größten Durchmesser des Fräsabschnitts von 8 mm die Anzahl der Hauptnuten 7 bis 9, vorzugsweise 8, beträgt,
- bei einem größten Durchmesser des Fräsabschnitts von 10 mm die Anzahl der Hauptnuten 8 oder 9, vorzugsweise 8, beträgt,
- bei einem größten Durchmesser des Fräsabschnitts von 12 oder 12,7 mm die Anzahl der Hauptnuten 9 bis 11, vorzugsweise 10, beträgt, und/oder
- bei einem größten Durchmesser des Fräsabschnitts von 15 oder 16 mm die Anzahl der Hauptnuten 11 bis 13, vorzugsweise 12, beträgt.

Bei allen vorgenannten angegebenen Unter- und Obergrenzen für Parameterwerte sind diese nicht als jeweils geschlossene bzw. fixe Paare anzusehen. So kann z.B. die bevorzugte Untergrenze eines genannten Wertepaares mit der Obergrenze eines anderen genannten Wertepaares einen weiteren vorteilhaften Bereich darstellen. Es ist beispielweise möglich, dass eine bevorzugte Spanbrechertiefe zwischen 5% (Anspruch 1) und 20% (Anspruch 2) der Hauptnuttiefe liegt.

Die Fräsabschnitte der erfindungsgemäßen Frässtifte können mit verschiedenen Beschichtungen versehen werden, die zu einer Reduzierung des Verschleißes und einer Erhöhung der Lebensdauer beitragen. Solche Spezialbeschichtungen können z.B. aus TiN, TiAIN, AlTiN, DLC, CH-NFE und CH-FEP bestehen.

Es versteht sich, dass für unterschiedliche Geometrien der Fräsabschnitte unterschiedliche Zahlenwerte in Bezug auf die genannten physikalischen Größen (Drallwinkel, Freiwinkel, Spanwinkel, Spanbrechertiefe, Anzahl Hauptnuten) innerhalb der beanspruchten Bereiche zu einem jeweils optimales Ergebnis hinsichtlich Zerspanungsleistung und Lebensdauer der Frässtifte führen.

Vorteilhafte Weiterbildungen sind durch die Merkmale der Unteransprüche gekennzeichnet.

Im Folgenden wird die Erfindung anhand von Figuren näher erläutert. Es zeigen:
- **Fig. 1**: eine Seitenansicht eines erfindungsgemäßen Frässtifts;
- **Fig. 2**: eine Querschnittsansicht entlang A-A in Fig. 1;
- **Fig. 3**: eine Detailvergrößerung der Fig. 2;
- **Fig. 4**: eine Querschnittsansicht eines Details ähnlich der Fig. 3, hier aber durch einen Spanbrecher verlaufend;
- **Fig. 5**: eine perspektivische Schnittansicht auf den Fräsabschnitt; und
- **Fig. 6**: eine Draufsicht auf den Frässtift.

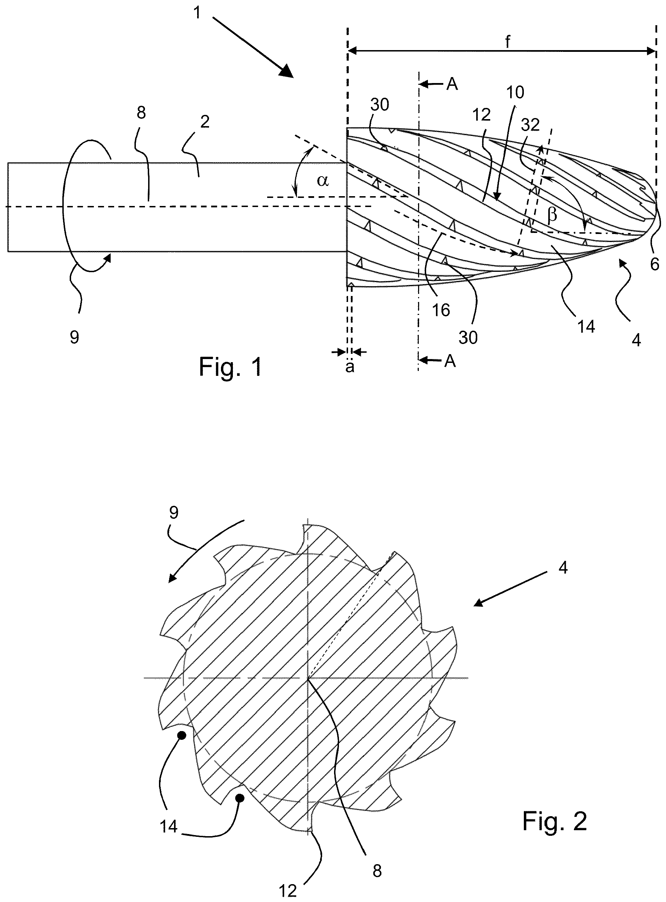

In den Fig. 1-6 ist ein erstes Ausführungsbeispiel eines erfindungsgemäßen Frässtifts 1 dargestellt. Gemäß der Seitenansicht der Fig. 1 weist ein Frässtift 1 einen zylindrischen Schaftabschnitt 2 und einen vorliegend im Wesentlichen konusförmigen, umfangsseitig nach außen leicht gewölbten, Fräsabschnitt 4 auf, wobei letzterer eine Fräslänge f aufweist und in einer Frässpitze 6 endet. Der Schaftabschnitt 2 dient zum Befestigen in einem per Hand oder automatisch betätigten Werkzeug, das den Schaftabschnitt 2 und damit den gesamten Frässtift 1 in eine Drehrichtung 9 in Rotation versetzt, um ein metallenes Werkstück zu schleifen. Hierzu sind der Schaftabschnitt 2 und der Fräsabschnitt 4 drehsymmetrisch zu einer Rotationsachse 8 ausgebildet.

Zumindest der Fräsabschnitt 4 besteht aus Hartmetall. Der Schaftabschnitt 2 kann ebenfalls - was auch bevorzugt ist - aus Hartmetall bestehen und ist dann vorzugsweise einteilig mit dem Fräsabschnitt 4 ausgebildet; alternativ ist der Schaftabschnitt 2 aus Stahl gefertigt, wobei dann der Schaftabschnitt 2 mit dem Fräsabschnitt 4 beispielsweise durch Löten verbunden ist. Der Fräsabschnitt 4 kann unterschiedliche Geometrien aufweisen. Anstelle eines im Wesentlichen konus- bzw. kegelförmigen Querschnitts kann der Fräsabschnitt 4 mit einem konstanten oder kugelförmigen Querschnitt ausgebildet sein. Viele weitere Formen sind möglich, ebenso wie Mischformen, die dem Fachmann allesamt bekannt sind.

Am Fräsabschnitt 4 wechseln sich in Drehrichtung 9 des Frässtifts 1 Schneiden 10 und Hauptnuten 14 ab, wobei diese Schneiden 10 und Hauptnuten 14 entlang des Fräsabschnitts 4, gesehen in Richtung der Frässpitze 6, in einer ersten Drallrichtung 16 helixförmig mit einem ersten, hier konstanten Drallwinkel α von 30° verlaufen (s. Fig. 1). Der erste Drallwinkel α wird - im Bereich des Fräsabschnitts 4 mit dem größten Durchmesser, hier also im Bereich des Übergangs vom Fräsabschnitt 4 zum Schaftabschnitt 2 - zwischen einer an die Schneidkante 12 (s.u.) einer Schneide 10 angelegten Tangente und einer Parallelen zur Rotationsachse 8 gemessen. Die erste Drallrichtung 16 verläuft hierbei in Drehrichtung 9. Die Anzahl der Hauptnuten 14 ist niedrig gewählt und ist kleiner als 15. Bei dem dargestellten Ausführungsbeispiel sind zehn Hauptnuten 14 und damit auch zehn Schneiden 10 vorhanden (s. Fig. 2).

Der erste Drallwinkel α ist gemäß der Erfindung größer als 25°, vorzugsweise größer als 27,5° und liegt bevorzugt im Bereich zwischen 29° und 32°.

Eine besonders bevorzugte Ausführung zeigen die Figuren, bei denen der erste Drallwinkel α konstant 30° beträgt. Auch sind Ausführungsformen möglich, bei denen die zumindest zwei aufeinanderfolgenden Schneiden 10 einen voneinander verschiedenen ersten Drallwinkel α aufweisen, beispielsweise mit einem 0,5°, 1° oder 2° voneinander verschiedenen ersten Drallwinkel α.

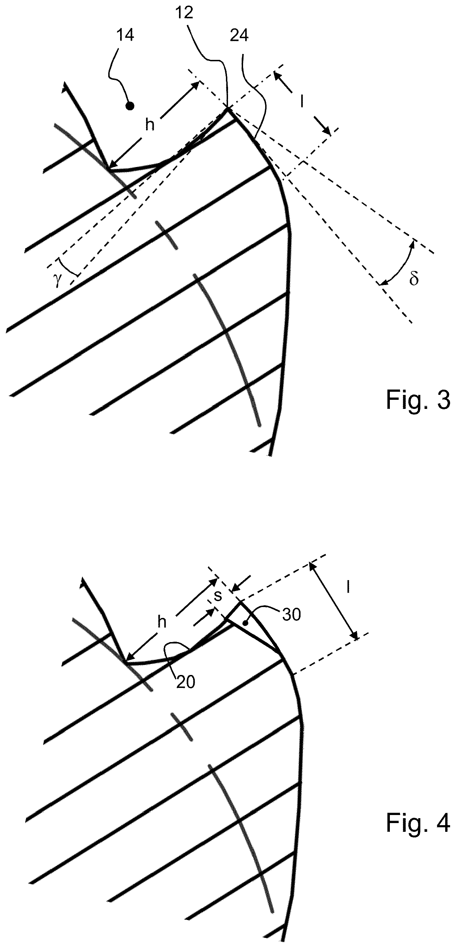

Wie insbesondere der Fig. 2 zu entnehmen ist, weist jede der Schneiden 10 eine Schneidkante 12 auf. Auf der der Drehrichtung 9 des Frässtifts 1 zugewandten Seite jeder Schneidkante 12 ist bekanntermaßen eine Spanfläche 20 vorhanden, die einen Spanwinkel γ mit einer senkrecht zur und durch die Rotationsachse 8 des Frässtifts 1 verlaufenden Geraden bildet (s. Fig. 3). Auf der in Drehrichtung 9 abgewandten Seite jeder Schneidkante 12 ist eine Freifläche 24 (im Englischen: primary relief) vorhanden, die einen Freiwinkel δ mit einer an der Schneidkante 12 anliegenden Tangente bildet, wobei diese Tangente an einen die Schneidkanten 12 berührenden imaginären Kreis angelegt ist (s. Fig. 3). Eine weitere Freifläche (im Englischen: secondary relief), die sich an die besagte erste Freifläche 24 entgegen der Drehrichtung 9 anschließen würde, ist nicht vorgesehen und auch generell nicht bevorzugt.

Der Spanwinkel γ liegt bei dem in den Figuren abgebildeten Ausführungsbeispiel bei ca. +7° und liegt bevorzugt generell im Bereich zwischen -3° und +14°, hierbei vorzugsweise zwischen 0° und +12° und besonders bevorzugt im Bereich zwischen +5° und +10°.

Auch variable Spanwinkel sind möglich. Solche variablen Spanwinkel können für einen oder mehrere individuelle Schneiden und/oder zwischen verschiedenen Schneiden realisiert werden.

Der Freiwinkel δ liegt bei dem in den Figuren abgebildeten Ausführungsbeispiel bei ca. 15° und gemäß der Erfindung generell im Bereich zwischen 10° und 20°, vorzugsweise zwischen 12° und 18° und besonders bevorzugt zwischen 13° und 15°. Die Freifläche 24 weist vorzugsweise eine Breite l, gemessen in Drehrichtung 9 des Frässtifts 1, von 0,2 mm bis 1 mm, vorzugsweise von 0,4 bis 0,8 mm auf.

Bei Frässtiften mit einem definierten Vorderradius, wie ihn der Frässtift 1 gemäß der Fig. 1-6 aufweist, liegt der Spanwinkel γ der Schneiden 10 an der Frässpitze 6 vorzugsweise zwischen -3° und 0°. Frässtifte ohne definierten Stirnradius haben z.B. einen zylindrischen oder kegelförmigen Fräsabschnitt.

In jeder Freifläche 24 der Schneiden 10 sind entlang deren Verlauf in erster Drallrichtung 16 mehrere Spanbrecher 30 (im Englischen: chip breaker) vorgesehen. Die Spanbrecher 30 weisen jeweils eine Spanbrechertiefe s auf, die gemäß der Erfindung im Vergleich zur Hauptnuttiefe h gering ist (s. Fig. 4). Die Spanbrecher 30 benachbarter Schneiden 10 folgen aufeinander in Form einer Helix, die sich in einer zweiten Drallrichtung 32, die der ersten Drallrichtung 16 und damit auch der Drehrichtung 9 entgegengesetzt ist. Der zweite Drallwinkel β wird zwischen einer Tangente an eine Verbindungslinie von in aufeinanderfolgenden Freiflächen 24 vorgesehener benachbarter, aber zueinander schräg versetzter Spanbrecher 30 und einer Parallelen zur Rotationsachse 8 gemessen. Der auf diese Weise gebildete zweite Drallwinkel β ist, wie in dem dargestellten Ausführungsbeispiel, vorzugsweise konstant.

Die erwähnte Spanbrechertiefe s liegt erfindungsgemäß im Bereich zwischen 5 und 25% der Hauptnuttiefe h, vorzugsweise im Bereich zwischen 10% und 20% der Hauptnuttiefe h. Es hat sich herausgestellt, dass eine solche im Verhältnis zur Hauptnuttiefe h geringe Spanbrechertiefe große Vorteile in Bezug auf die effektive Schneidlänge der Schneiden 10 hat, die Langlebigkeit erhöht bzw. den Verschleiß der Schneiden 10 verringert und dennoch die Hauptaufgabe der Spanbrecher 30 effektiv erledigt, nämlich die Spankontrolle zu verbessern und gleichzeitig den Schnittwiderstand zu verringern.

Im vorliegend in den Figuren abgebildeten Ausführungsbeispiel beträgt die Spanbrechertiefe s ca. 17% von der Hauptnuttiefe h.

In beispielhaften absoluten Zahlen angegeben, liegt die Spanbrechertiefe s vorzugsweise im Bereich zwischen 0,1 bis 0,25 mm. Bei einem Beispiel beträgt die Spanbrechertiefe s 0,1 mm bei einer Hauptnuttiefe h von 1 mm. Bei einem anderen Beispiel beträgt die Spanbrechertiefe s 0,2 mm bei einer Hauptnuttiefe h von 2 mm. Bei diesen beiden Beispielen beträgt die Spanbrechertiefe s 10% der Hauptnuttiefe h. Gemäß den oben angegebenen Prozentbereichen ist es aber ohne Weiteres ebenfalls möglich, wenn die Spanbrechertiefe s 0,2 mm bei einer Hauptnuttiefe h von 1 mm beträgt, das Verhältnis der beiden Tiefen also 20% beträgt.

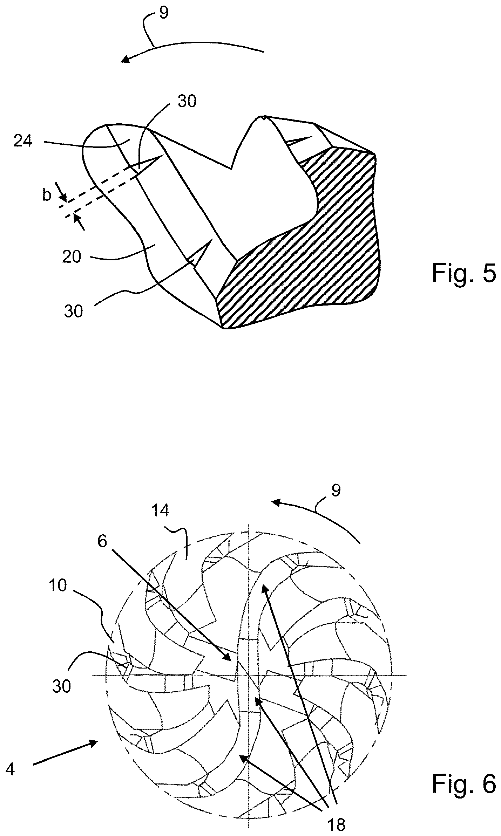

Die Spanbrecherbreite b (s. Fig. 5), die aufgrund der Herstellung der Spanbrecher 30 mittels an sich bekannter Schneidräder mit der Spanbrechertiefe s zusammenhängt, ist bevorzugt größer als die Spanbrechertiefe s und beispielsweise doppelt so groß. Bei einem Fräsabschnitt 4 mit einem 12 mm-Durchmesser kann die Spanbrechertiefe s beispielsweise 0,2 mm und die Spanbrecherbreite b beispielsweise 0,4 mm betragen.

Die Anzahl der Spanbrecher 30 entlang einer Schneidkante 12 ist von der Fräslänge f, dem Durchmesser des Fräsabschnitts 4 und/oder der Anzahl der Schneiden 10 abhängig. Die Anzahl der Spanbrecher 30 entlang einer Schneide 10 liegt beispielsweise zwischen vier und acht, zum Beispiel bei fünf oder sechs. In dem dargestellten Ausführungsbeispiel sind fünf Spanbrecher 30 pro Schneide 10 vorgesehen.

Es ist besonders vorteilhaft, wenn die Spanbrecher 30 vollständig in der jeweiligen Freifläche 24 verlaufen bzw. in dieser eingebettet sind, wie dies in der perspektivischen Schnittansicht der Fig. 5 erkennbar ist.

Es ist bevorzugt, wenn Spanbrecher 30 einen Abstand a zum Grenzbereich zwischen dem Fräsabschnitt 4 und dem Schaftabschnitt 2 aufweisen (s. Fig. 1), wobei dieser Abstand a vorzugsweise mindestens 1 mm beträgt. Ebenfalls ist es bevorzugt, wenn ein entsprechender Abstand von Spanbrechern 30 zur Frässpitze 6 vorhanden ist (nicht eingezeichnet, aber in Fig. 6 erkennbar). Beide Maßnahmen dienen dazu, dass die effektive Länge einer Schneidkante 12 zwischen einem Spanbrecher 30 und dem frei auslaufenden Ende der Schneidkante 12 nicht zu klein wird, so dass die Gefahr des Brechens dieses Schneidkantenabschnitts beim Schleifen bzw. Fräsen eines Werkstücks nicht signifikant zunimmt.

Der genannte zweite Drallwinkel β, der von den Spanbrechern 30 gebildet ist, die in entgegen der Drehrichtung 9 aufeinander folgenden Schneiden 10 vorgesehen sind und die helixförmig am Fräsabschnitt 4 umlaufen, liegt bei der dem in den Figuren dargestellten Ausführungsbeispiel bei ca. -81°, und generell vorteilhafterweise im Bereich zwischen -75° und -88°, bevorzugt zwischen -78° und -85° und besonders bevorzugt zwischen -80° und -82°.

In dem in den Figuren dargestellten Ausführungsbeispiel ist der zweite Drallwinkel β negativ; er kann aber auch positiv sein und vorteilhafterweise zwischen +75° und +88° liegen, vorzugsweise zwischen +78° und +85°, und besonders bevorzugt zwischen +80° und +82°. Hierbei verlaufen dann die erste Drallrichtung 16 und die zweite Drallrichtung 32 beide in Drehrichtung 9.

Wie insbesondere der Draufsicht der Fig. 6 zu entnehmen ist, gehen die Schneiden 10 mindestens eines Paares von Schneiden 10, die an sich gegenüberliegenden Seiten des Fräsabschnitts 4 verlaufen, an der Frässpitze 6 ineinander über und bilden vorliegend in der Draufsicht eine S-Form 18 aus. Auch weitere Schneiden 10, die bevorzugt am Fräsabschnitt 4 einander gegenüber verlaufen, können ineinander übergehen, so dass beispielsweise vier solche Schneiden 10 in der Draufsicht eine Kreuzform (mit geschwungenen Armen) ausbilden.

Schon oben wurde erwähnt, dass erfindungsgemäß die Anzahl der Hauptnuten 14 relativ klein gewählt wird. Bei dem in den Figuren dargestellten Ausführungsbeispiel sind, wie oben ausgeführt, zehn Hauptnuten 14 und zehn Schneiden 10 vorhanden. Es hat sich als vorteilhaft erwiesen, wenn die Anzahl der Hauptnuten 14 kleiner oder gleich dem maximalen Durchmesser des Fräsabschnitts 4, gemessen in mm, ist.

Die für das in den Figuren dargestellte Ausführungsbeispiel angegebenen Werteangaben (insbesondere zur Spanbrechertiefe s, zur Hauptnuttiefe h, zum Spanwinkel γ, zum Freiwinkel δ, zur Freifläche 24) beziehen sich auf den Bereich des Fräsabschnitts 4 mit dem größten Durchmesser, d.h. vorliegend auf den Bereich des Übergangs zwischen dem Fräsabschnitt 4 zum Schaftabschnitt 2. Auf diese Weise wird ein einheitlicher Bezugspunkt angegeben, der auch für Fräsabschnitte 4 mit einer unterschiedlichen Geometrie (beispielsweise kugelkopfförmig) gilt. Etwas weniger präzise, für den Fachmann aber auch verständlich, könnte die Bezeichnung "Grundkörper des Fräsabschnitts 4" gewählt werden, insbesondere zur Abgrenzung vom Bereich der Frässpitze 6.

### Bezugszeichenliste

- 1: Frässtift
- 2: Schaftabschnitt
- 3: Übergang
- 4: Fräsabschnitt
- 6: Frässpitze
- 8: Rotationsachse
- 9: Drehrichtung
- 10: Schneiden
- 12: Schneidkante
- 14: Hauptnuten
- 16: erste Drallrichtung
- 18: S-Form
- 20: Spanfläche
- 24: Freifläche
- 30: Spanbrecher
- 32: zweite Drallrichtung

- f: Fräslänge
- h: Hauptnuttiefe
- s: Spanbrechertiefe
- b: Spanbrecherbreite
- l: Breite der Freifläche
- a: Abstand
- α: erster Drallwinkel
- β: zweiter Drallwinkel
- γ: Spanwinkel
- δ: Freiwinkel

## Patentansprüche

1. Frässtift (1) für ein elektrisch oder pneumatisch betriebenes, in der Hand zu haltendes oder automatisch betriebenes Werkzeug zum Schleifen von Metalloberflächen, umfassend:
- einen Schaftabschnitt (2) und
- einen Fräsabschnitt (4) aus einem Hartmetall, der sich an den Schaftabschnitt (2) anschließt und in einer Frässpitze (6) endet, wobei der Fräsabschnitt (4) eine Fräslänge (f) und eine Vielzahl von Schneiden (10) aufweist, die durch voneinander beabstandete Hauptnuten (14) getrennt sind, die eine Hauptnuttiefe (h) aufweisen und sich in einer ersten Drallrichtung (16) helixförmig mit einem ersten Drallwinkel (α) entlang der Fräslänge (f) erstrecken, wobei jede der Schneiden (10) eine Spanfläche (20) und eine Freifläche (24) sowie eine Schneidkante (12) am Übergang zwischen der Spanfläche (20) und der Freifläche (24) unter Bildung eines Spanwinkels (γ) und eines Freiwinkels (δ) aufweist, wobei eine Mehrzahl von Spanbrechern (30) in jeder Freifläche (24) vorgesehen ist, wobei die Spanbrecher (30) eine Spanbrechertiefe (s) aufweisen und helixförmig in einer zweiten Drallrichtung (32) mit einem zweiten Drallwinkel (β) entlang des Fräsabschnitts (4) angeordnet sind, wobei im Bereich des Fräsabschnitts (4) mit dem größten Durchmesser:
- der Spanwinkel (γ) zwischen -3° und +14° liegt,
- der Freiwinkel (δ) zwischen 10° und 20° liegt,
**dadurch gekennzeichnet, dass** im Bereich des Fräsabschnitts (4) mit dem größten Durchmesser:
- die Spanbrechertiefe (s) zwischen 5 und 25% der Hauptnuttiefe (h) liegt,
- der erste Drallwinkel (α) größer als 25° ist, und
- die Anzahl der Hauptnuten (14) kleiner als 15
ist, vorzugsweise nicht größer als 12.

2. Frässtift (1) nach Anspruch 1, **dadurch gekennzeichnet, dass** die Spanbrechertiefe (s) im Bereich des Fräsabschnitts (4) mit dem größten Durchmesser zwischen 10% und 20% der Hauptnuttiefe (h) liegt.

3. Frässtift (1) nach einem der vorhergehenden Ansprüche, **dadurch gekennzeichnet, dass** die Spanbrechertiefe (s) im Bereich des Fräsabschnitts (4) mit dem größten Durchmesser zwischen 0,1 und 0,25 mm bei einer Hauptnuttiefe (h) von 0,5 mm bis 2,5 mm liegt, beispielsweise bei 0,1 mm im Falle einer Hauptnuttiefe (h) von 1 mm und/oder bei 0,2 mm im Falle einer Hauptnuttiefe (h) von 2 mm.

4. Frässtift (1) nach einem der vorhergehenden Ansprüche, **dadurch gekennzeichnet, dass** die Spanbrechertiefe (s) höchstens so groß ist wie die Spanbrecherbreite (b), gemessen entlang der Schneidkante (12), und beispielsweise halb so groß.

5. Frässtift (1) nach einem der vorhergehenden Ansprüche, **dadurch gekennzeichnet, dass** die Spanbrecher (30) vollständig in der jeweiligen Freifläche (24) verlaufen.

6. Frässtift (1) nach einem der vorhergehenden Ansprüche, **dadurch gekennzeichnet, dass** alle Spanbrecher (30) einen Abstand (a) zum Übergang zwischen Schaftabschnitt (2) und Fräsabschnitt (4) und/oder zur Frässpitze (6) aufweisen, wobei dieser Abstand vorzugsweise mindestens 1 mm beträgt.

7. Frässtift (1) nach einem der vorhergehenden Ansprüche, **dadurch gekennzeichnet, dass** der Freiwinkel (δ) im Bereich des Fräsabschnitts (4) mit dem größten Durchmesser zwischen 12° und 18°, besonders bevorzugt zwischen 13° und 15° liegt.

8. Frässtift (1) nach einem der vorhergehenden Ansprüche, **dadurch gekennzeichnet, dass** der besagte Spanwinkel (γ) im Bereich des Fräsabschnitts (4) mit dem größten Durchmesser zwischen +0° und +12°, besonders bevorzugt zwischen +5° und +10° liegt.

9. Frässtift (1) nach einem der vorhergehenden Ansprüche, **dadurch gekennzeichnet, dass** die Freifläche (24) im Bereich des Fräsabschnitts (4) mit dem größten Durchmesser eine Breite (l), gemessen in Drehrichtung (9) des Frässtifts (1), von 0,2 mm bis 1 mm, vorzugsweise von 0,4 bis 0,8 mm aufweist.

10. Frässtift (1) nach einem der vorhergehenden Ansprüche, **dadurch gekennzeichnet, dass** die besagte Freifläche (24) die einzige bei der Herstellung der Hauptnuten (14) erzeugte Freifläche ist, so dass keine sich an die besagte Freifläche (24) in Drehrichtung (9) des Frässtifts (1) anschließende Freifläche vorhanden ist.

11. Frässtift (1) nach einem der vorhergehenden Ansprüche, **dadurch gekennzeichnet, dass** der erste Drallwinkel (α) größer als 27,5° ist und vorzugsweise zwischen 29° und 32° liegt, besonders bevorzugt bei 30°.

12. Frässtift (1) nach einem der vorhergehenden Ansprüche, **dadurch gekennzeichnet**, das der zweite Drallwinkel (β) zwischen -75° und -88° liegt, vorzugsweise zwischen -78° und -85°, besonders bevorzugt zwischen -80° und -82°, oder dass der zweite Drallwinkel zwischen +75° und +88° liegt, vorzugsweise zwischen +78° und +85°, besonders bevorzugt zwischen +80° und +82°.

13. Frässtift (1) nach einem der vorhergehenden Ansprüche, **dadurch gekennzeichnet, dass** der Fräsabschnitt (4) an seiner Frässpitze (6) einen Radius aufweist und dass die Schneidkanten (12) mindestens eines Paares von Schneidkanten (12), die an sich gegenüberliegenden Seiten des Fräsabschnitts (4) verlaufen, an der Frässpitze (6) ineinander übergehen, wobei die zwei Schneidkanten (12) des besagten mindestens einen Paares in der Draufsicht auf die Frässpitze (6) vorzugsweise eine S-Form (18) ausbilden.

14. Frässtift (1) nach einem der vorhergehenden Ansprüche, **dadurch gekennzeichnet, dass** die Anzahl der Hauptnuten (14) kleiner oder gleich dem größten Durchmesser des Fräsabschnitts (4) gemessen in mm ist.

15. Frässtift (1) nach einem der vorhergehenden Ansprüche, **dadurch gekennzeichnet, dass**
- bei einem größten Durchmesser des Fräsabschnitts (4) von 6 mm die Anzahl der Hauptnuten (14) 5 bis 7, vorzugsweise 6, beträgt,
- bei einem größten Durchmesser des Fräsabschnitts (4) von 8 mm die Anzahl der Hauptnuten (14) 7 bis 9, vorzugsweise 8, beträgt,
- bei einem größten Durchmesser des Fräsabschnitts (4) von 10 mm die Anzahl der Hauptnuten (14) 8 oder 9, vorzugsweise 8, beträgt,
- bei einem größten Durchmesser des Fräsabschnitts (4) von 12 oder 12,7 mm die Anzahl der Hauptnuten (14) 9 bis 11, vorzugsweise 10, beträgt, und/oder
- bei einem größten Durchmesser des Fräsabschnitts (4) von 15 oder 16 mm die Anzahl der Hauptnuten (14) 11 bis 13, vorzugsweise 12, beträgt.

## Claims

1. A burr (1) for an electrically or pneumatically operated, hand-held or automatically operated tool for milling metal surfaces, comprising:
- a shaft portion (2), and
- a milling portion (4) made from hard metal adjoining the shaft portion (2) and ending in a milling tip (6), the milling portion (4) having a milling length (f) and a plurality of cutters (10) separated by spacedapart main flutes (14) having a main flute depth (h) and extending helically in a first twist direction (16) with a first twist angle (α) along the milling length (f), each of the cutters (10) having a rake face (20) and a relief face (24) and a cutting edge (12) at the transition between the rake face (20) and the relief face (24) forming a rake angle (γ) and a relief angle (δ),
wherein a plurality of chip breakers (30) is provided in each relief face (24), the chip breakers (30) having a chip breaker depth (s) and extending helically in a second twist direction (32) with a second twist angle (β) along the milling portion (4),
wherein in the region of the milling portion (4) having the largest diameter:
- the rake angle (γ) is in the range between -3° and +14°,
- the relief angle (δ) is in the range between 10° and 20°,
**characterized in that** in the region of the milling portion (4) having the largest diameter:
- the chip breaker depth (s) is in the range between 5 and 25% of the main flute depth (h),
- the first twist angle (α) is greater than 25°, and
- the number of main flutes (14) is less than 15, preferably not greater than 12.

2. A burr (1) according to claim 1, **characterized in that** in the region of the milling portion (4) having the largest diameter the chip breaker depth (s) is in the range between 10% and 20% of the main flute depth (h).

3. A burr (1) according to any of the preceding claims, **characterized in that** in the region of the milling portion (4) having the largest diameter the chip breaker depth (s) is in the range between 0.1 and 0.25 mm at a main flute depth (h) between 0.5 mm and 2.5 mm, for example 0.1 mm for a main flute depth of 1 mm and/or 0.2 mm for a main flute depth of 2 mm.

4. A burr (1) according to any of the preceding claims, **characterized in that** the chip breaker depth (s) is at most as large as the chip breaker width (b) measured along the cutting edge (12), and for example half as large.

5. A burr (1) according to any of the preceding claims, **characterized in that** the chip breakers (30) run completely in the relief face (24).

6. A burr (1) according to any of the preceding claims, **characterized in that** all chip breakers (30) have a distance (a) from the transition between the shaft portion (2) and the milling portion (4) and/or from the milling tip (6), this distance preferably being at least 1 mm.

7. A burr (1) according to any of the preceding claims, **characterized in that** in the region of the milling portion (4) having the largest diameter the relief angle (δ) is in the range between 12° and 18°, preferably between 13° and 15°.

8. A burr (1) according to any of the preceding claims, **characterized in that** in the region of the milling portion (4) having the largest diameter said rake angle (γ) is in the range between 0° and +12°, and most preferred in the range between +5° and +10°.

9. A burr (1) according to any of the preceding claims, **characterized in that** in the region of the milling portion (4) having the largest diameter said relief face (24) has a width (l) of 0.2 mm to 1 mm, preferably between 0.4 and 0.8 mm, measured in the direction of rotation (9) of the burr (1).

10. A burr (1) according to any of the preceding claims, **characterized in that** said relief face (24) is the only relief face created during the production of the main flutes (14), so that there is no other relief face adjacent to said relief face (24) in the direction of rotation (9) of the burr (1).

11. A burr (1) according to any of the preceding claims, **characterized in that** the first twist angle (α) is greater than 27.5° and preferably in the range between 29° and 32°, particularly preferred at 30°.

12. A burr (1) according to any of the preceding claims, **characterized in that** the second twist angle (β) is in the range between -75° and -88°, preferably between -78° and -85°, particularly preferred between -80° and -82°; or that said second twist angle (β) is in the range between +75° and +88°, preferably between +78° and +85°, particularly preferred between +80° and +82°.

13. A burr (1) according to any of the preceding claims, **characterized in that** the milling portion (4) at its milling tip (6) has a radius and that the cutting edges (12) of at least one pair of cutting edges (12) running on opposite sides of the milling portion (4) merge into one another at the milling tip (6), wherein the two cutting edges (12) of said at least one pair preferably form an S-shape (18) in the plan view of the milling tip (6).

14. A burr (1) according to any of the preceding claims, **characterized in that** the number of main flutes (14) is less than or equal to the largest diameter of the milling portion (4) measured in mm.

15. A burr (1) according to any of the preceding claims, **characterized in that**
- for a largest diameter of the milling portion (4) of 6 mm, the number of main flutes (14) is 5 to 7, preferably 6,
- for a largest diameter of the milling portion (4) of 8 mm, the number of main flutes (14) is 7 to 9, preferably 8,
- for a largest diameter of the milling portion (4) of 10 mm, the number of main flutes (14) is 8 or 9, preferably 8,
- for a largest diameter of the milling portion (4) of 12 or 12,7 mm, the number of main flutes (14) is 9 to 11, preferably 10, and/or
- for a largest diameter of the milling portion (4) of 15 or 16 mm, the number of main flutes (14) is 11 to 13, preferably 12.

## Revendications

1. Tige de fraisage (1) pour un outil électrique ou pneumatique à main ou automatique pour affilage de surfaces métalliques, comprenant :
- une partie du manche (2) et
- une partie de fraisage (4) en un métal dur, qui se raccorde à la partie du manche (2) et se termine par une pointe de fraisage (6), la partie de fraisage (4) présentant une longueur de fraisage (f) et une pluralité de tranchants (10), qui sont séparés par des gorges principales (14) espacées les unes des autres, qui présentent une profondeur de gorge principale (h) et s'étendent dans une première direction de torsion (16) en hélice avec un premier angle de torsion (α) le long de la longueur de fraisage (f), chacun des tranchants (10) présentant une surface de copeaux (20) et une face de flanc (24) ainsi qu'un arête tranchant (12) à la transition entre la surface de copeaux (20) et la face de flanc (24) en formant un angle de copeaux (γ) et un angle de flanc (δ),
une pluralité de broyeurs de copeaux (30) étant prévus dans chaque face de flanc (24), les broyeurs de copeaux (30) présentant une largeur (s) de broyeur de copeaux et étant disposés en hélice dans une deuxième direction de torsion (32) avec un deuxième angle de torsion (β) le long de la partie de fraisage (4),
dans la zone de la partie de fraisage (4) avec le plus grand diamètre :
- l'angle de copeaux (γ) étant compris entre -3° et +14°,
- l'angle de flanc (δ) étant compris entre 10° et 20°,
**caractérisé en ce que** dans la zone de la partie de fraisage (4) avec le plus grand diamètre :
- la largeur (s) de broyeur de copeaux est comprise entre 5 et 25 % de la profondeur de gorge principale (h),
- le premier angle de torsion (α) est supérieur à 25°, et
le nombre de gorges principales (14) est inférieur à 15, de préférence n'est pas supérieur à 12.

2. Tige de fraisage (1) selon la revendication 1, **caractérisée en ce que** la largeur (s) de broyeur de copeaux dans la zone de la partie de fraisage (4) avec le plus grand diamètre est comprise entre 10 % et 20 % de la profondeur de gorge principale (h).

3. Tige de fraisage (1) selon l'une quelconque des revendications précédentes, **caractérisée en ce que** la largeur (s) de broyeur de copeaux dans la zone de la partie de fraisage (4) avec le plus grand diamètre est comprise entre 0,1 et 0,25 mm pour une profondeur de gorge principale (h) de 0,5 mm à 2,5 mm, par exemple à 0,1 mm dans le cas d'une profondeur de gorge principale (h) de 1 mm et/ou à 0,2 mm dans le cas d'une profondeur de gorge principale (h) de 2 mm.

4. Tige de fraisage (1) selon l'une quelconque des revendications précédentes, **caractérisée en ce que** la largeur (s) de broyeur de copeaux est au maximum aussi grande que la largeur de broyeur de copeaux (b), mesurée le long de l'arête tranchant (12), et par exemple deux fois plus grande.

5. Tige de fraisage (1) selon l'une quelconque des revendications précédentes, **caractérisée en ce que** les broyeurs de copeaux (30) s'étendent complètement dans la face de flanc (24) respective.

6. Tige de fraisage (1) selon l'une quelconque des revendications précédentes, **caractérisée en ce que** tous les broyeurs de copeaux (30) présentent une distance (a) par rapport à la transition entre la partie du manche (2) et la partie de fraisage (4) et/ou par rapport à la pointe de fraisage (6), cette distance étant de préférence d'au moins 1 mm.

7. Tige de fraisage (1) selon l'une quelconque des revendications précédentes, **caractérisée en ce que** l'angle de flanc (δ) dans la zone de la partie de fraisage (4) avec le plus grand diamètre est compris entre 12° et 18°, de manière particulièrement préférée entre 13° et 15°.

8. Tige de fraisage (1) selon l'une quelconque des revendications précédentes, **caractérisée en ce que** ledit angle de copeaux (γ) dans la zone de la partie de fraisage (4) avec le plus grand diamètre est compris entre +0° et +12°, de manière particulièrement préférée entre +5° et +10°.

9. Tige de fraisage (1) selon l'une quelconque des revendications précédentes, **caractérisée en ce que** la face de flanc (24) dans la zone de la partie de fraisage (4) avec le plus grand diamètre présente une largeur (l), mesurée dans la direction de rotation (9) de la tige de fraisage (1), de 0,2 mm à 1 mm, de préférence de 0,4 à 0,8 mm.

10. Tige de fraisage (1) selon l'une quelconque des revendications précédentes, **caractérisée en ce que** ladite face de flanc (24) est la seule face de flanc produite lors de la fabrication des gorges principales (14), de sorte qu'aucune face de flanc se raccordant à ladite face de flanc (24) dans la direction de rotation (9) de la tige de fraisage (1) n'est présente.

11. Tige de fraisage (1) selon l'une quelconque des revendications précédentes, **caractérisée en ce que** le premier angle de torsion (α) est supérieur à 27,5° et est de préférence compris entre 29° et 32°, de manière particulièrement préférée à 30°.

12. Tige de fraisage (1) selon l'une quelconque des revendications précédentes, **caractérisée en ce que** le deuxième angle de torsion (β) est compris entre -75° et -88°, de préférence entre -78° et -85°, de manière particulièrement préférée entre -80° et -82°, ou **en ce que** le deuxième angle de torsion est compris entre +75° et +88°, de préférence entre +78° et +85°, de manière particulièrement préférée entre +80° et +82°.

13. Tige de fraisage (1) selon l'une quelconque des revendications précédentes, **caractérisée en ce que** la partie de fraisage (4) présente un rayon au niveau de sa pointe de fraisage (6) et **en ce que** les arêtes tranchant (12) d'au moins une paire d'arêtes tranchant (12), qui s'étendent sur des côtés opposés de la partie de fraisage (4), se transforment l'une dans l'autre au niveau de la pointe de fraisage (6), les deux arêtes tranchant (12) de ladite au moins une paire formant de préférence une forme en S (18) dans la vue de dessus de la pointe de fraisage (6).

14. Tige de fraisage (1) selon l'une quelconque des revendications précédentes, **caractérisée en ce que** le nombre de gorges principales (14) est inférieur ou égal au plus grand diamètre de la partie de fraisage (4), mesuré en mm.

15. Tige de fraisage (1) selon l'une quelconque des revendications précédentes, **caractérisée en ce que**
- pour un plus grand diamètre de la partie de fraisage (4) de 6 mm, le nombre de gorges principales (14) est de 5 à 7, de préférence de 6,
- pour un plus grand diamètre de la partie de fraisage (4) de 8 mm, le nombre de gorges principales (14) est de 7 à 9, de préférence de 8,
- pour un plus grand diamètre de la partie de fraisage (4) de 10 mm, le nombre de gorges principales (14) est de 8 ou 9, de préférence de 8,
- pour un plus grand diamètre de la partie de fraisage (4) de 12 ou 12,7 mm, le nombre de gorges principales (14) est de 9 à 11, de préférence de 10, et/ou
- pour un plus grand diamètre de la partie de fraisage (4) de 15 ou 16 mm, le nombre de gorges principales (14) est de 11 à 13, de préférence de 12.
